# FASCICULE DE BREVET EUROPEEN

(11) **EP 1 792 064 B1**
(45) Date de publication et mention de la délivrance du brevet: **29.10.2008**
(21) Numéro de dépôt: 05800558.8
(22) Date de dépôt: 02.09.2005
(51) Int. Cl.: F01N 3/022

(54) **STRUCTURE DE FILTRATION DES GAZ D'ECHAPPEMENT D'UN MOTEUR A COMBUSTION INTERNE ET LIGNE D'ECHAPPEMENT ASSOCIEE**
ANORDNUNG ZUM FILTERN DER ABGASE EINES VERBRENNUNGSMOTORS UND DAZUGEHÖRIGE ABGASSTRECKE
STRUCTURE FOR FILTERING EXHAUST GASES OF AN INTERNAL COMBUSTION ENGINE, AND ASSOCIATED EXHAUST LINE

(30) Priorité: 06.09.2004 FR 0409407; 08.12.2004 FR 0413089
(43) Date de publication de la demande: 06.06.2007
(73) Titulaire: Saint-Gobain Centre de Recherches et d'Etudes Européen, 92400 Courbevoie (FR)
(72) Inventeur: BARDON, Sébastien, 13600 La Ciotat (FR); BRIOT, Anthony, F-84000 AVIGNON (FR); GLEIZE, Vincent, F-84000 AVIGNON (FR)
(74) Mandataire: Habasque, Etienne J. Jean-François
(86) Numéro de dépôt international: PCT/FR2005/002195
(87) Numéro de publication internationale: WO 2006/027487

(56) Documents cités:
- EP-A- 1 382 374
- FR-A- 2 816 002
- US-A- 5 405 423

## Description

La présente invention concerne une structure de filtration des gaz d'échappement d'un moteur à combustion interne selon le préambule de la revendication 1.

On connaît de US 5 405 423 une structure du type précité.

De telles structures sont utilisées notamment dans les dispositifs de dépollution des gaz d'échappement de moteurs diesel de véhicules automobiles. Ces dispositifs comportent une ligne d'échappement comprenant en série un organe de purification catalytique et un filtre à particules. L'organe de purification catalytique est adapté pour le traitement des émissions polluantes en phase gazeuse, alors que le filtre à particules est adapté pour retenir les particules de suie émises par le moteur.

Dans des structures connues du type précité (voir par exemple FR 2 816 002), les organes de filtration comprennent un ensemble de conduits adjacents d'axes parallèles, séparés par des parois poreuses de filtration. Ces conduits s'étendent entre une face d'admission et une face d'évacuation. Ces conduits sont par ailleurs obturés à l'une ou l'autre de leurs extrémités pour délimiter des chambres d'entrée s'ouvrant sur la face d'admission et des chambres de sortie s'ouvrant sur la face d'évacuation.

Ces structures fonctionnent suivant une succession de phases de filtration et de régénération. Lors des phases de filtration, les particules de suie émises par le moteur se déposent sur les parois des chambres d'entrée. La perte de charge à travers le filtre augmente progressivement. Au-delà d'une valeur prédéterminée de cette perte de charge, une phase de régénération est effectuée.

Lors de la phase de régénération, les particules de suie, composées essentiellement de carbone, sont brûlées sur les parois des chambres d'entrée afin de restituer à la structure des propriétés originelles.

Les particules de suie ne s'accumulent pas de manière homogène dans les organes de filtration. Ainsi, les suies s'accumulent préférentiellement au centre de la structure de filtration et vers la face d'évacuation des gaz d'échappement.

Pour amorcer la combustion des suies, des allumeurs sont disposés dans la ligne d'échappement, au voisinage des faces d'admission des organes de filtration. Par suite, la combustion démarre à l'avant et au centre du filtre puis se propage vers i'arrière.

De telles structures ne donnent pas entière satisfaction. En effet, l'amorçage de la combustion est difficile dans certains cas, en raison de la faible teneur en suies dans les organes de filtration au voisinage de la face amont. Par ailleurs, lorsque la combustion atteint la face d'évacuation, la température qui règne au voisinage de cette face augmente fortement en raison de la teneur élevée en suies. Les phases de régénération sont donc difficiles à contrôler.

Un but de l'invention est de fournir une structure de filtration du gaz d'échappement d'un moteur à combustion interne dans laquelle le contrôle des phases de régénération est facilité.

A cet effet, l'invention a pour objet une structure de filtration selon la revendication 1.

Par « masse thermique », on entend, pour un volume donné de matériau, le produit de la capacité calorifique moyenne de ce matériau, par la masse de matériau dans le volume donné.

La structure de filtration peut comporter une ou plusieurs des caractéristiques qui font l'objet des revendications 2 à 11.

L'invention a en outre pour objet une ligne d'échappement de véhicule automobile, caractérisée en ce qu'elle comprend une structure telle que définie ci-dessus.

Des exemples de mise en oeuvre de l'invention vont maintenant être décrits en regard des dessins annexés, sur lesquels :
- la Figure 1 est une vue en perspective d'un premier filtre selon l'invention ;
- la Figure 2 est une vue partielle en coupe suivant le plan II-II du filtre de la Figure 1 ;
- la Figure 3 est une vue analogue à la Figure 2 d'un deuxième filtre selon l'invention ;
- la Figure 4 est une vue analogue à la Figure 1 d'un troisième filtre selon l'invention ; et
- la Figure 5 est une vue analogue à la Figure 2 d'une variante du premier filtre selon l'invention.

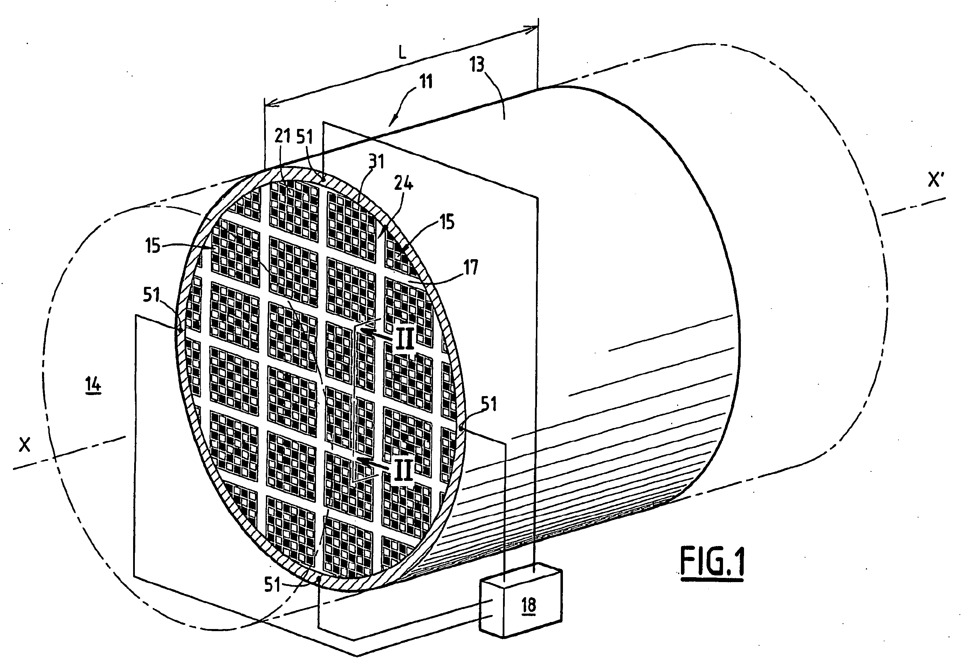

Le filtre à particules 11 représenté sur la Figure 1 est disposé dans une ligne 13 d'échappement des gaz d'un moteur diesel de véhicule automobile, représentée partiellement.

Cette ligne d'échappement 13 se prolonge au-delà des extrémités du filtre à particules 11 et délimite un passage 14 de circulation des gaz d'échappement.

Le filtre à particules 11 s'étend sur une longueur L suivant un axe X-X' longitudinal de circulation des gaz d'échappement et comprend une pluralité de blocs 15 de filtration de longueur L juxtaposés, reliés entre eux par des joints de liaison 17 disposés entre les faces adjacentes des blocs 15. Il comporte en outre des moyens 18 d'amorçage de la régénération.

Chaque bloc de filtration 15 est de forme sensiblement parallélépipédique rectangle allongée parallèlement à l'axe X-X'.

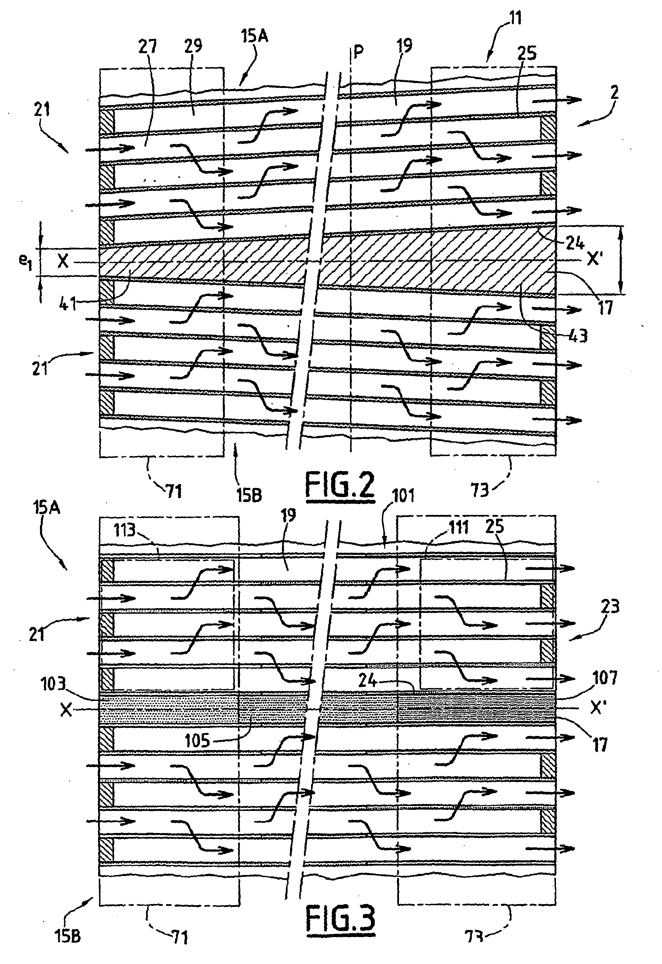

Comme illustré par la Figure 2, où deux bloc de filtration 15A, 15B ont été représentés, chaque bloc 15A, 15B comporte une structure de filtration 19 poreuse, une face 21 d'admission des gaz d'échappement à filtrer, une face 23 d'évacuation des gaz d'échappement filtrés, et des faces latérales 24 actives (quatre faces pour les blocs courants).

Les faces 21 et 23 sont planes et sensiblement perpendiculaires à l'axe X-X'.

La structure de filtration poreuse 19 est réalisée en un matériau de filtration constitué d'une structure monolithique, notamment en céramique (cordiérite, carbure de silicium, ...).

Cette structure 19 possède une porosité suffisante pour permettre le passage des gaz d'échappement. Cependant, comme connu en soi, le diamètre des pores est choisi suffisamment petit pour assurer une retenue des particules de suie.

La structure poreuse 19 comporte un ensemble de conduits adjacents d'axes sensiblement parallèles à l'axe X-X'. Ces conduits sont séparés par des parois 25 poreuses de filtration. Dans l'exemple illustré sur la Figure 1, ces parois 25 sont d'épaisseur constante et s'étendent longitudinalement dans la structure de filtration 19, de la face d'admission 21 à la face d'évacuation 23.

Les conduits sont répartis en un premier groupe de conduits d'entrée 27 et un second groupe de conduits de sortie 29. Les conduits d'entrée 27 et les conduits de sortie 29 sont disposés tête-bêche.

Les conduits d'entrée 27 sont obturés au niveau de la face d'évacuation 23 du bloc de filtration 15A, 15B et sont ouverts à leur autre extrémité.

Au contraire, les conduits de sortie 29 sont obturés au niveau de la face d'admission 21 du bloc de filtration 15A, 15B et débouchent suivant sa face d'évacuation 23.

Dans l'exemple illustré par la Figure 1, les conduits d'entrée 27 et de sortie 29 ont des sections constantes suivant toute leur longueur.

Les faces d'admission 21 des blocs 15 d'une part, et leurs faces d'évacuation 23 d'autre part, sont sensiblement coplanaires, et définissent respectivement une face d'admission des gaz dans le filtre 11 et une face d'évacuation des gaz hors du filtre 11.

Comme représenté sur la Figure 1, les faces latérales 24 du bloc de filtration situées en regard d'un autre bloc de filtration sont planes. Les faces latérales 31 situées en regard de la ligne d'échappement 13 sont de forme adaptée pour assurer le contact avec la paroi intérieure cylindrique de cette ligne 13.

Le joint de liaison 17 est disposé entre les faces planes 24 des blocs de filtration 15. Ce joint de liaison 17 est réalisé à base de ciment céramique, généralement constitué de silice et/ou de carbure de silicium et/ou de nitrure d'aluminium. Après frittage, ce ciment a un module d'élasticité d'environ 5000 MPa. Les blocs de filtration 15 sont ainsi fixés entre eux par le joint 17.

Dans l'exemple illustré par la Figure 2, le joint de liaison 17 présente une épaisseur continûment croissante le long de l'axe X-X'. Cette épaisseur augmente linéairement entre une épaisseur e₁ dans le plan des faces d'admission 21 et une épaisseur e₂ dans le plan des faces d'évacuation 23.

L'épaisseur e₁ est par exemple comprise entre 0,5 mm et 1 mm et l'épaisseur e₂ est par exemple comprise entre 2 mm et 5 mm.

Par ailleurs, le joint 17 présente une structure homogène le long du filtre 11.

Comme illustré par la Figure 2, des parties amont et aval 41, 43 du joint 17 s'étendent respectivement de part et d'autre d'un plan P transversal au filtre 11 situé entre les faces d'admission 21 et les faces d'évacuation 23 des blocs 15A, 15B. Ces parties amont et aval 41, 43 sont par ailleurs délimitées respectivement par le plan des faces d'amission 21 et par le plan des faces d'évacuation 23.

La masse thermique par unité de longueur, prise suivant l'axe X-X', de la partie aval 43 est supérieure à la masse thermique par unité de longueur de la partie amont 41.

En référence à la Figure 1, les moyens 18 d'amorçage de la régénération comprennent des allumeurs 51 qui font saillie dans le passage de circulation 14 des gaz d'échappement au voisinage de la face amont 21.

Ces allumeurs 51 sont par exemple du type décrit dans la demande FR 2 816 002.

Le fonctionnement du premier filtre 11 selon l'invention va maintenant être décrit.

Lors d'une phase de filtration (Figure 1), les gaz d'échappement chargés de particules sont guidés jusqu'aux faces d'entrée 21 des blocs de filtration 15 par la ligne d'échappement 13. Comme indiqué par des flèches sur la Figure 2, ils pénètrent ensuite dans les conduits d'entrée 27, et passent à travers les parois 25 de la structure poreuse 19. Lors de ce passage, les suies se déposent sur les parois 25 des conduits d'entrée 27. Ces suies se déposent préférentiellement au centre du filtre à particules 11 et vers la face d'évacuation 23 des blocs de filtration 15 (à droite sur le dessin).

Les gaz d'échappement filtrés s'échappent par les conduits d'évacuation 29 et sont guidés vers la sortie de la ligne d'échappement 13.

Lorsque le véhicule a parcouru 500 km environ, la perte de charge à travers le filtre 11 augmente de manière significative. Une phase de régénération est alors effectuée.

Lors de cette phase, les allumeurs 51 sont activés, de sorte que la température des gaz d'échappement est augmentée au voisinage des faces d'admission 21. Lorsque ces gaz atteignent des températures suffisantes, ils amorcent la combustion des suies dans les blocs 15, dans la région amont 71 du filtre située au voisinage des faces d'admission 21.

En raison de la faible masse thermique par unité de longueur dans la région amont 71, la température qui y règne s'élève rapidement jusqu'à une gamme adaptée pour permettre la combustion des suies, malgré la faible teneur en suies dans cette région 71.

La combustion se propage ensuite vers les faces d'évacuation 23. En raison de la forte teneur en suies dans la région aval 73 du filtre 11, la puissance thermique générée par la combustion de ces suies est élevée dans cette région 73.

Toutefois, l'augmentation de température de cette région aval 73 est limitée par la masse thermique par unité de longueur élevée dans la partie aval 43 du joint 17.

Ainsi, lors des phases de régénération, le filtre 11 selon l'invention facilite l'amorçage de la combustion des suies au voisinage des faces d'admission 21, et limite l'emballement de cette combustion lorsque celle-ci atteint le voisinage des faces d'évacuation 23. Le contrôle des phases de régénération est donc facilité dans ce filtre 11.

Dans le deuxième filtre 101 selon l'invention, représenté en regard de la Figure 3, le joint 17 présente une épaisseur constante le long de l'axe X-X'.

Le joint 17 comprend, le long de l'axe X-X' et d'amont en aval, une pluralité de parties 103, 105, 107, chaque partie 103, 105, 107 présentant une densité constante. La densité des parties 103, 105, 107 du joint 17 augmente le long du filtre, de sorte que la partie aval 107 présente une masse thermique par unité de longueur supérieure à la masse thermique par unité de longueur de la partie intermédiaire 105, laquelle présente une masse thermique par unité de longueur supérieure à la masse thermique par unité de longueur de la partie amont 103.

Ainsi, la densité de la partie aval 107 est par exemple comprise entre 2 et 3, la densité de la partie intermédiaire 105 est par exemple comprise entre 1,5 et 2,5, et la densité de la partie amont 103 est par exemple comprise entre 1 et 1,5.

Dans une première variante de ce filtre 101, le joint 17 comprend, le long de l'axe X-X' d'amont en aval, une pluralité de parties 103, 105, 107, chaque partie présentant une porosité constante.

La porosité des parties 103, 105, 107 diminue le long du filtre 101, de sorte que la partie aval 107 présente une masse thermique par unité de longueur supérieure à la masse thermique par unité de longueur de la partie intermédiaire 105, laquelle présente une masse thermique par unité de longueur supérieure à la masse thermique par unité de longueur de la partie amont 103.

Ainsi, la porosité de la partie amont 103 est par exemple comprise entre 45 % et 50 %, la porosité de la partie intermédiaire 105 est par exemple comprise entre 40 % et 45 %, et la porosité de la partie aval 107 est par exemple comprise entre 35 % et 40 %.

Dans une deuxième variante de ce filtre 101, la porosité et/ou la densité du joint varie de manière continue le long du joint 17, de sorte que la masse thermique par unité de longueur varie également de manière continue le long du joint 17.

Dans une troisième variante de ce filtre 101, les parois elles-mêmes des blocs de filtration 15A, 15B présentent également une porosité décroissante suivant l'axe X-X'. Les blocs 15A, 15B présentent ainsi une région aval 111 de masse thermique par unité de longueur le long du filtre 101 supérieure à la masse thermique par unité de longueur d'une région amont 113. Ainsi, la masse thermique par unité de longueur des blocs de filtration 15A, 15B augmente le long du filtre 101.

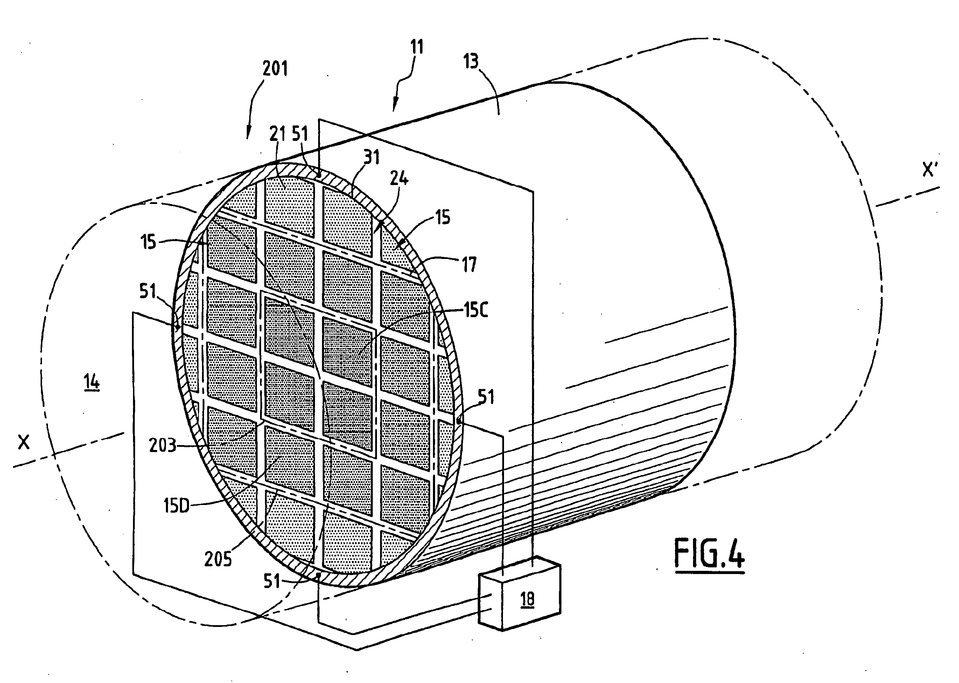

Dans le filtre 201 représenté en regard de la Figure 4, et à la différence du filtre 11 représenté sur la Figure 1, les blocs de filtration périphériques 15D présentent, dans au moins un plan transversal, une masse thermique par unité de volume, inférieure à la masse thermique par unité de volume des blocs de filtration 15C situés au centre du filtre 201.

Ainsi, la région centrale 203, à relativement plus forte teneur en suies, présente une masse thermique par unité de volume supérieure à la région périphérique 203, à relativement plus faible teneur en suies.

Par ailleurs, comme dans le filtre 11 de la Figure 1, le joint 17 comprend une partie aval de masse thermique par unité de longueur supérieure à la masse thermique par unité de longueur d'une partie amont de ce joint 17.

Grâce à l'invention qui vient d'être décrite, il est possible de disposer d'une structure de filtration dans laquelle la mise en oeuvre et le contrôle des phases de régénération sont facilités. En effet, la masse thermique de la structure est adaptée à la répartition des suies dans celle-ci, de sorte que les régions de forte accumulation de suies présentent une masse thermique supérieure aux régions de faible accumulation de suies.

En particulier, cette répartition des masses thermiques dans la structure favorise l'amorçage de la combustion des suies au voisinage des faces d'admission et limite l'augmentation de la température au voisinage des faces d'évacuation lors des phases de régénération.

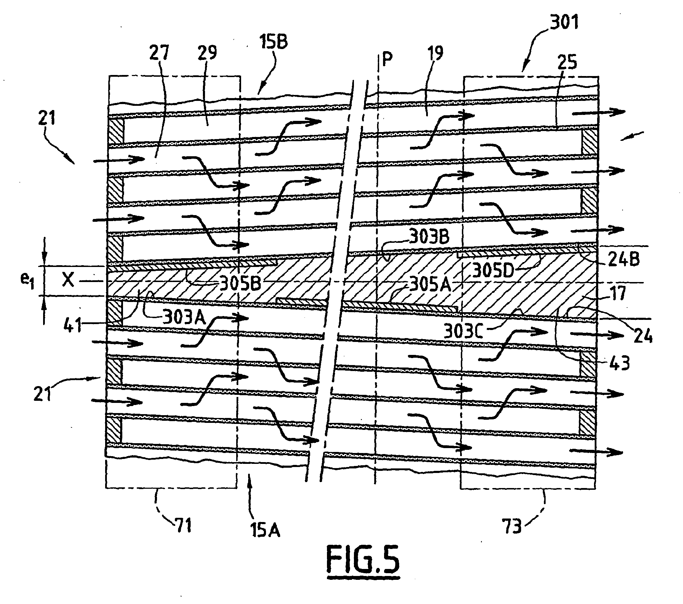

Le filtre 301 représenté sur la Figure 5 diffère du filtre 11 représenté sur les Figures 1 et 2 par les caractéristiques suivantes.

Les faces latérales respectives 24A et 24B des premier et deuxième blocs 15A et 15B situées en regard l'une de l'autre comprennent chacune au moins une région 303 fermement solidaire du joint 17 et au moins une région 305 qui, lors de la fabrication du filtre 301, est couverte d'un revêtement antiadhésif. Ce revêtement est par exemple formé à base de papier, de polytétrafluoroéthylène, de polyéthylène, de polypropylène, de graphite ou de nitrure de bore.

Ainsi chaque région 303 constitue une région d'adhérence forte avec le joint 17, désignée par la suite par « région d'adhérence forte », tandis que chaque région 305 constitue une région d'adhérence faible ou nulle avec le joint 17, désignée par la suite par « région d'adhérence faible ou nulle ».

L'adhérence entre le joint de liaison 17 et les faces latérales 24 dans les régions d'adhérence forte 303 est au moins dix fois supérieure à l'adhérence entre le joint de liaison 17 et les faces latérales 24 dans les régions d'adhérence faible ou nulle 305, laquelle est comprise entre 0 et 50 MPa.

Dans l'exemple représenté sur la Figure 5, la face latérale 24A du premier bloc de filtration 15A comprend successivement, depuis la face d'admission 21 vers la face d'évacuation 23, une première région 303A d'adhérence forte, une région 305A d'adhérence faible ou nulle, et une deuxième région 303C d'adhérence forte.

Chaque région d'adhérence forte 303A, 303C de la première face 24A est disposée sensiblement en regard d'une région 305B, 305D d'adhérence faible ou nulle de la deuxième face 248. De même, chaque région d'adhérence faible ou nulle 305A de la première face 24A est disposée sensiblement en regard d'une région 303B d'adhérence forte de la deuxième face 24B.

Cette variante peut également être mise en oeuvre dans le filtre 201 représenté sur la Figure 3.

## Revendications

1. Structure (11 ; 101 ; 201 ; 301) de filtration des gaz d'échappement d'un moteur à combustion interne, du type comprenant :
- au moins des premier et deuxième organes de filtration (15A, 15B) s'étendant sensiblement parallèlement à un axe longitudinal (X-X') de la structure (11 ; 101 ; 201 ; 301) entre une région (21) d'admission des gaz dans la structure et une région (23) d'évacuation des gaz de la structure ; et
- un joint (17) de liaison desdits organes (15A, 15B) ;
le joint (17) comprenant au moins une partie aval (43 ; 107) qui présente une masse thermique par unité de longueur supérieure à la masse thermique par unité de longueur d'une partie amont (41 ; 103) du joint (17), **caractérisée en ce que** le joint (17) est réalisé à base de ciment céramique pour fixer entre eux les organes de filtration (15A ; 15B).

2. Structure (11 ; 201 ; 301) selon la revendication 1, **caractérisée en ce que** le joint (17) présente une masse thermique par unité de longueur sensiblement continûment croissante le long du joint (17) entre la région d'admission (21) et la région d'évacuation (23).

3. Structure (101) selon la revendication 1, **caractérisée en ce que** le joint (17) présente, suivant ledit axe longitudinal (X-X'), une pluralité de parties (103, 105, 107) ayant chacune une masse thermique par unité de longueur sensiblement constante.

4. Structure (11 ; 301) selon l'une quelconque des revendications 1 à 3, **caractérisée en ce que** la partie aval (43) du joint (17) présente une épaisseur moyenne supérieure à l'épaisseur moyenne de la partie amont (41) du joint (17).

5. Structure (101) selon l'une quelconque des revendications 1 à 3, **caractérisée en ce que** l'épaisseur du joint (17) est sensiblement constante le long de l'axe longitudinal (X-X').

6. Structure (101) selon l'une quelconque des revendications précédentes, **caractérisée en ce que** la partie aval (107) du joint (17) présente une densité supérieure à la densité de la partie amont (103) du joint (17).

7. Structure (101) selon l'une quelconque des revendications précédentes, **caractérisée en ce que** la partie aval (107) du joint (17) présente une porosité inférieure à la porosité de la partie amont (103) du joint (17).

8. Structure (101) selon l'une quelconque des revendications précédentes, **caractérisée en ce que** l'un au moins des premier et deuxième organes de filtration (15A, 15B) comprend au moins une région aval (111) qui présente une masse thermique par unité de longueur supérieure à la masse thermique par unité de longueur d'une région amont (113) de cet organe de filtration (15A, 15B).

9. Structure (201) selon l'une quelconque des revendications précédentes, **caractérisée en ce qu'**elle présente une région périphérique (205) ayant une masse thermique par unité de volume inférieure à la masse thermique par unité de volume d'une région centrale (203) de la structure (201).

10. Structure (301) selon l'une quelconque des revendications précédentes, **caractérisée en ce que** les organes de filtration (15A, 15B) comprennent respectivement des première et deuxième faces (24A, 24B) situées en regard l'une de l'autre et reliées entre elles par le joint de liaison (17), la première face (24A) comprenant :
- au moins une région (303A, 303C) d'adhérence forte avec le joint (17), située sensiblement en regard d'une région (305B, 305D) d'adhérence faible ou nulle avec ledit joint (17) de la deuxième face (24B) ; et
- au moins une région (305A) d'adhérence faible ou nulle avec le joint (17), située sensiblement en regard d'une région (303B) d'adhérence forte avec ledit joint (17) de la deuxième face (24B).

11. Structure (11 ; 101 ; 201 ; 301) selon l'une quelconque des revendications précédentes, **caractérisée en ce que** les premier et deuxième organes de filtration présentent des faces latérales planes en regard, le joint étant disposé entre les faces latérales planes.

12. Ligne d'échappement (13) de véhicule automobile, **caractérisée en ce qu'**elle comprend une structure (11 ; 101 ; 201 ; 301) selon l'une quelconque des revendications précédentes.

## Claims

1. Structure (11; 101; 201; 301) to filter exhaust gas from an internal combustion engine, of the type comprising:
- at least first and second filtration parts (15A, 15B) extending significantly parallel to a longitudinal axis (X-X') of the structure (11; 101; 201; 301) between a gas inlet area (21) in the structure and a gas outlet area (23) in the structure; and
- a joint (17) connecting the said parts (15A, 15B);
the joint comprising at least one downstream part (43; 107) which has a thermal mass per unit of length which is greater than the thermal mass per unit of length of an upstream part (41; 103), **characterised in that** the joint (17) is made from a ceramic cement base to fix the filtration parts (15A; 15B) between them.

2. Structure (11; 201; 301) according to claim 1 **characterised in that** the joint (17) has a thermal mass per unit of length significantly and continuously increasing along the joint (17) between the inlet area (21) and the outlet area (23).

3. Structure (101) according to claim 1 **characterised in that** the joint (17) has, following the said longitudinal axis (X-X'), a plurality of parts (103, 105, 107) each having a thermal mass per unit of length which is significantly constant.

4. Structure (11; 301) according to whichsoever of claims 1 to 3 **characterised in that** the downstream part (43) of joint (17) has an average thickness greater than the average thickness of the upstream part (41) of the joint (17).

5. Structure (101) according to whichsoever of claims 1 to 3 **characterised in that** the thickness of joint (17) is significantly constant along the longitudinal axis (X-X').

6. Structure (101) according to whichsoever of the previous claims **characterised in that** the density of the downstream part (107) of joint (17) is greater than the density of the upstream part (103) of the joint (17).

7. Structure (101) according to whichsoever of the previous claims **characterised in that** the porosity of the downstream part (107) of the joint (17) is less than the porosity of the upstream part (103) of the joint (17).

8. Structure (101) according to whichsoever of the previous claims **characterised in that** at least one of the first and second filtration parts (15A, 15B) comprises at least one downstream area (111) whose thermal mass per unit of length is greater than the thermal mass per unit of length of an upstream area (113) of this filtration part (15A, 15B).

9. Structure (201) according to whichsoever of the previous claims **characterised in that** it has a peripheral area (205) whose thermal mass per unit of length is less than the thermal mass per unit of length of a central area (203) of the structure (201).

10. Structure (301) according to whichsoever of the previous claims **characterised in that** the filtration parts (15A, 15B) respectively comprise first and second faces (24A, 24B) located facing one another and linked to one another by the link joint (17), the first face (24A) comprising:
- at least one high adherence area (303A, 303C) to the joint (17), located significantly facing an area (305B, 305D) with low or no adherence to the said joint (17) of the second face (24B); and
- at least one area (305A) with low or no adherence to joint (17), located significantly facing an area (303B) with high adherence to the said joint (17) of the second face (24B).

11. Structure (11; 101; 201; 301) according to whichsoever of the previous claims **characterised in that** the first and second filtration parts have facing plane lateral faces, the joint being placed between the plane lateral faces.

12. The exhaust line (13) of the motor vehicle, **characterised in that** it comprises a structure (11; 101; 201; 301) according to whichsoever of the previous claims.

## Patentansprüche

1. Anordnung (11; 101; 209; 301) zum Filtern der Abgase eines Verbrennungsmotors, aufweisend:
- zumindest ein erstes und zweites Filterelement (15A, 15B), die sich im Wesentlichen parallel zu einer Längsachse (X-X) der Anordnung (11; 101; 201; 301) zwischen einem Bereich (21) für die Zuleitung der Gase in die Anordnung und einem Bereich (23) für die Ableitung der Gase aus der Anordnung erstrecken; und
- eine Verbindungsstelle (17) zur Verbindung der Elemente (15A, 15B);
wobei die Verbindungsstelle (17) zumindest einen stromabwärts gelegenen Teil (43; 107) enthält, der eine thermisch wirksame Masse pro Längeneinheit aufweist, die höher als die thermisch wirksame Masse pro Längeneinheit eines stromaufwärts gelegenen Teils (41; 103) der Verbindungsstelle (17) ist,
**dadurch gekennzeichnet, dass** die Verbindungstelle (17) auf der Basis von Keramik-Zement hergestellt ist, um die Filterelemente (15A, 15B) zueinander zu fixieren.

2. Anordnung (11; 201; 301) nach Anspruch 1, **dadurch gekennzeichnet, dass** die Verbindungsstelle (17) eine thermisch wirksame Masse pro Längeneinheit aufweist, die entlang der Verbindungsstelle (17) zwischen dem Zuleitungsbereich (21) und dem Ableitungsbereich (23) im Wesentlichen kontinuierlich ansteigt.

3. Anordnung (101) nach Anspruch 1, **dadurch gekennzeichnet, dass** die Verbindungsstelle (17) in der Längsachse (X-X') eine Vielzahl von Teilen (103, 105, 107) aufweist, die jeweils eine thermisch wirksame Masse pro Längeneinheit haben, die im Wesentlichen konstant ist.

4. Anordnung (11; 301) nach einem der Ansprüche 1 bis 3, **dadurch gekennzeichnet, dass** der stromabwärts gelegene Teil (43) der Verbindungsstelle (17) eine mittlere Dicke aufweist, die größer als die mittlere Dicke des stromaufwärts gelegenen Teils (41) der Verbindungsstelle (17) ist.

5. Anordnung (101) nach einem der Ansprüche 1 bis 3, **dadurch gekennzeichnet, dass** die Dicke der Verbindungsstelle (17) entlang der Längsachse (X-X') im Wesentlichen konstant ist.

6. Anordnung (101) nach einem der vorangegangenen Ansprüche, **dadurch gekennzeichnet, dass** der stromabwärts gelegene Teil (107) der Verbindungsstelle (17) eine Dichte aufweist, die größer als die Dichte des stromaufwärts gelegenen Teils (103) der Verbindungsstelle (17) ist.

7. Anordnung (101) nach einem der vorangegangenen Ansprüche, **dadurch gekennzeichnet, dass** der stromabwärts gelegene Teil (107) der Verbindungsstelle (17) eine Porosität aufweist, die niedriger als die Porosität des stromaufwärts gelegenen Teils (103) der Verbindungsstelle (17) ist.

8. Anordnung (101) nach einem der vorangegangenen Ansprüche, **dadurch gekennzeichnet, dass** zumindest eines von dem ersten und zweiten Filterelement (15A, 15B) zumindest einen stromabwärts gelegenen Bereich (111) enthält, der eine thermisch wirksame Masse pro Längeneinheit aufweist, die größer als die thermisch wirksame Masse pro Längeneinheit eines stromaufwärts gelegenen Bereichs (113) dieses Filterelements (15A, 15B) ist.

9. Anordnung (201) nach einem der vorangegangenen Ansprüche, **dadurch gekennzeichnet, dass** sie einen umlaufenden Bereich (205) aufweist, der eine thermisch wirksame Masse pro Volumeneinheit hat, die kleiner als die thermisch wirksame Masse pro Volumeneinheit eines mittleren Bereichs (203) der Anordnung (201) ist.

10. Anordnung (301) nach einem der vorangegangenen Ansprüche, **dadurch gekennzeichnet, dass** die Filterelemente (15A, 15B) jeweils eine erste und zweite Fläche (24A, 24B) enthalten, die einander gegenüberliegen und über die Verbindungsstelle (17) miteinander verbunden sind, wobei die erste Fläche (24A) enthält:
- zumindest einen Bereich (303A, 303C) mit einer starken Verbindung zu der Verbindungstelle (17), der im Wesentlichen einem Bereich (305B, 305D) mit einer schwachen Verbindung oder ohne Verbindung zu der Verbindungsstelle (17) der zweiten Fläche (24B) gegenüberliegt; und
- zumindest einen Bereich (305A) mit einer schwachen Verbindung oder ohne Verbindung zu der Verbindungstelle (17), der im Wesentlichen einem Bereich (303B) mit einer starken Verbindung zu der Verbindungstelle (17) der zweiten Fläche (24B) gegenüberliegt.

11. Anordnung (11; 101; 201; 301) nach einem der vorangegangenen Ansprüche, **dadurch gekennzeichnet, dass** das erste und zweite Filterelement ebene gegenüberliegende Seitenflächen aufweisen, wobei die Verbindungsstelle zwischen den ebenen Seitenflächen angeordnet ist.

12. Abgasstrecke (13) für ein Kraftfahrzeug, **dadurch gekennzeichnet, dass** sie eine Anordnung (11; 101; 201; 301) nach einem der vorangegangenen Ansprüche aufweist.
